# EUROPEAN PATENT APPLICATION

(11) **EP 4 624 603 A1**
(43) Date of publication of application: **01.10.2025**
(21) Application number: 24903840.7
(22) Date of filing: 16.05.2024
(51) Int. Cl.: C22B 11/00, C22B 3/06, C22B 3/22

(54) **METHOD FOR PRODUCING PALLADIUM FROM AG SLIME**

(30) Priority: 11.12.2023 KR 20230178766
(71) Applicant: Korea Zinc Co., Ltd., Seoul 03159 (KR)
(72) Inventor: CHOI, Heon Sik, Ulsan 44696 (KR); JOO, Jae Hoon, Ulju-gun Ulsan 45003 (KR)
(74) Representative: Angerhausen, Christoph
(86) International application number: PCT/KR2024/006666
(87) International publication number: WO 2025/127267

(57) **Abstract**

One embodiment of the present disclosure disclosed a method for producing palladium from silver slime, comprising a gold separation process of introducing silver slime into an acid solution to produce a separated effluent containing leached palladium; a neutralization process of adding a neutralizing agent to the separated effluent to produce a neutralized precipitate containing oxidized palladium; a hydrochloric acid leaching process of adding hydrochloric acid to the effluent containing the neutralized precipitate to produce a hydrochloric acid leachate containing leached palladium and platinum; a chloride precipitation process of adding a precipitant to the hydrochloric acid leachate to produce a chloride precipitate containing palladium; and a purification process for recovering the palladium from the chloride precipitate.

## Description

### TECHNICAL FIELD

The present disclosure relates to a method for producing palladium (Pd) from silver (Ag) slime. More specifically, the present disclosure relates to a method for producing high-grade palladium by recovering palladium from silver slime generated during the silver electrolysis process.

### BACKGROUND ART

For recovering palladium (Pd) from silver (Ag) slime generated during a silver electrolysis process, a palladium leaching process is carried out using hydrochloric acid (HCl). In this leaching process, most of the platinum (Pt) is also leached, and the leached platinum remains until the subsequent purification processes. Consequently, to produce high-grade palladium (Pd) of 99.9% purity or more from silver slime, a purification process was generally performed three or more times.

In this regard, as the number of purification processes increases, there is an issue with increasing loss of palladium (Pd), which leads to a reduction in the recovery rate of palladium, and an increase in subsidiary materials needed for the purification processes.

### DISCLOSURE

### TECHNICAL PROBLEM

The present disclosure aims to provide a method for producing palladium from silver slime, wherein the leaching rate of palladium is maintained at a high level while decreasing the leaching rate of platinum in a hydrochloric acid leaching step, whereby the number of purification processes needed is reduced.

### TECHNICAL SOLUTION

According to one embodiment of the present disclosure , a method for producing palladium from silver slime is provided, comprising a gold separation process of introducing silver slime into an acid solution to produce a separated effluent containing leached palladium; a neutralization process of adding a neutralizing agent to the separated effluent to produce a neutralized precipitate containing oxidized palladium; a hydrochloric acid leaching process of adding hydrochloric acid to the effluent containing the neutralized precipitate to produce a hydrochloric acid leachate containing leached palladium and platinum; a chloride precipitation process of adding a precipitant to the hydrochloric acid leachate to produce a chloride precipitate containing palladium; and a purification process for recovering the palladium from the chloride precipitate.

According to one embodiment of the present disclosure, the hydrochloric acid in in the hydrochloric acid leaching process is added in an amount of 9 to 11 equivalents relative to the palladium content in the neutralized precipitate.

According to one embodiment of the present disclosure, the hydrochloric acid added is added in an amount of 10 equivalents relative to the palladium content in the neutralized precipitate.

According to one embodiment of the present disclosure, the hydrochloric acid has a concentration of 30% to 40%.

According to one embodiment of the present disclosure, the hydrochloric acid leaching process is carried out at a reaction temperature of 50°C to 70°C.

According to one embodiment of the present disclosure, the neutralization process further comprises a process of evaporating a portion of the separated effluent before the addition of the neutralizing agent.

According to one embodiment of the present disclosure, the purification process comprises repeating a process of leaching palladium from the chloride precipitate and precipitating the leached palladium.

### ADVANTAGEOUS EFFECTS

According to the present disclosure, it is possible to maintain a high leaching rate for palladium while reducing the leaching rate of platinum that is a major impurity.

Consequently, the present disclosure allows for a reduction in the number of repetitions of the purification process necessary to obtain final palladium, minimizing palladium loss and reducing the amount of subsidiary materials needed for the purification process.

### DESCRIPTION OF DRAWINGS

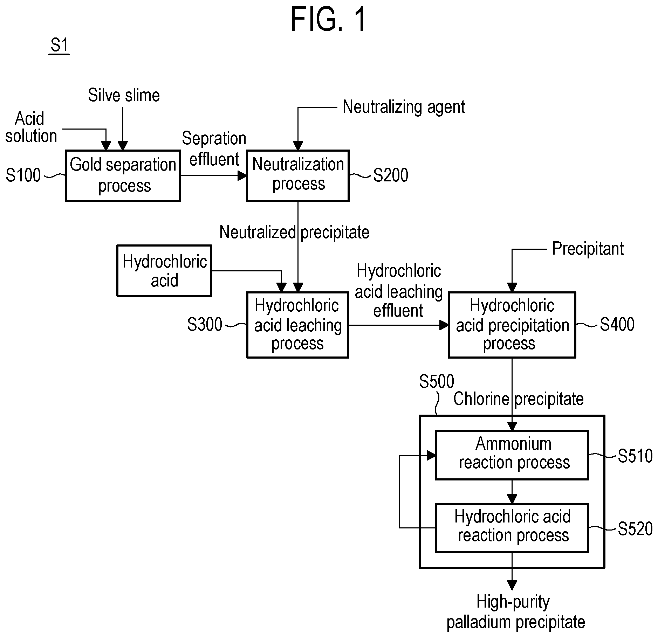

FIG. 1 is a flow diagram showing the method for producing palladium from silver slime according to an embodiment of the present disclosure.

### MODE FOR INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

FIG. 1 is a flow diagram showing the method for producing palladium from silver slime according to an embodiment of the present disclosure.

Referring to FIG. 1, the method for producing palladium from silver slime (S1) may include: a gold separation process (S100) of adding a leaching agent to the silver slime to separate gold in the form of cake and leach palladium into the separation effluent, a neutralization process (S200) of adding a neutralizing agent to the separation effluent to produce a neutralized precipitate containing oxidized palladium, a hydrochloric acid leaching process (S300) of adding hydrochloric acid to the neutralized precipitate to produce a hydrochloric acid leachate containing leached palladium and platinum, a chloride precipitation process (S400) of adding a precipitant to the hydrochloric acid leachate to produce a chloride precipitate containing palladium, and a purification process (S500) of recovering palladium from the chloride precipitate.

The method for producing palladium from silver slime according to an embodiment of the present disclosure is concerned with the production of high-quality palladium from silver slime containing impurities. The silver slime may be generated, for example, during the silver electrolysis process. In this regard, the silver slime may contain various metal elements, such as palladium (Pd), platinum (Pt), gold (Au), bismuth (Bi), tellurium (Te), copper (Cu), and lead (Pb), in addition to silver (Ag). The method for producing palladium from silver slime according to an embodiment of the present disclosure focuses on reducing the number of purification processes by maintaining a high leaching rate for palladium while reducing the leaching rate of platinum.

### Gold Separation Process (S100)

In the gold separation process (S100), gold (Au) can be separated from silver (Ag) slime. Specifically, in the gold separation process (S100), silver slime is introduced into nitric acid (HNO₃) to leach metals including palladium, while gold that is not leached into the solution is separated in the form of a cake. The leachate may also contain metals such as silver (Ag), bismuth (Bi), platinum, tellurium, copper, and lead alongside palladium. The solution in which palladium, etc., has been leached and separated from the gold-containing cake is referred to as the "separation effluent". The leaching reaction in the gold separation process can be represented by the following [Reaction Formula 1]:

[Reaction Formula 1] M + 2HNO₃ → M(NO₃)₂ + H₂(g), (M: Pd, Ag, Pt, Bi, Te, Cu, etc.)

Preferably, the gold separation process (S100) may be conducted for a reaction time of 3 to 5 hours at a reaction temperature of 60 to 80°C.

### Neutralization Process (S200)

In the neutralization process (S200), the separation effluent is neutralized to produce a precipitate containing oxidized palladium (PdO), while silver remains in the solution and thus can be separated.

In an embodiment, prior to neutralizing the separation effluent in the neutralization process (S200), an evaporation process may be performed to evaporate some of the separation effluent produced in the gold separation process (S100). This evaporation aims to remove acids (e.g., nitric acid) contained in the separation effluent, thereby reducing the amount of neutralizing agent required in the neutralization process (S200).

Furthermore, in the neutralization process (S200), the separation effluent may be diluted with water before the addition of a neutralizing agent. Neutralizing agents such as Na₂CO₃, NaOH, etC. can be used. Through the neutralization process (S200), palladium precipitates in the form of oxidized palladium (PdO), while silver does not precipitate and is mostly separated into the liquid. The precipitate containing oxidized palladium is referred to as "neutralized precipitate". The chemical reaction in the neutralization process can be expressed by the following [Reaction Formula 2]:

[Reaction Formula 2] Pd(NO₃)₂ + Na₂CO₃ → PdO + 2NaNO₃ + CO₂

Preferably, the neutralization reaction in the neutralization process (S200) may be carried out for a reaction time of 1 to 3 hours at a reaction temperature of 60 to 80°C.

### Hydrochloric Acid Leaching Process (S300)

In the hydrochloric acid leaching process (S300), leaching of the neutralized precipitate is performed using hydrochloric acid. In this process (S300), palladium and platinum are leached into the solution, while silver (Ag) that was not removed in the neutralization process (S200) can precipitate as silver chloride (AgCl). This allows for further separation of silver following the neutralization process (S200). The leachate from this process (S300), which contains leached palladium and platinum, is referred to as "hydrochloric acid leachate". In the hydrochloric acid leaching process (S300), the leaching reaction can be represented by the following [Reaction Formula 3], and the precipitation reaction by [Reaction Formula 4]:

[Reaction Formula 3] PdO + 2HCl → PdCl₂ + H₂O

[Reaction Formula 4] AgNO₃ + HCl → AgCl + HNO₃

Preferably, the hydrochloric acid leaching process (S300) is conducted at a reaction temperature of 60-80°C for 2-4 hours, with the concentration of hydrochloric acid being 30-40%.

The present inventors have discovered that by adjusting the amount of hydrochloric acid or the reaction temperature in the hydrochloric acid leaching process, it is possible to maintain a high leaching rate for palladium while reducing the leaching rate of the major impurity platinum. Reducing the leaching rate of platinum in the hydrochloric acid leaching process (S300) can decrease the number of repetitions required in the subsequent purification process (S500), thereby increasing the yield of palladium. For example, a single run of the purification process (S500) can result in a loss of approximately 10% of the palladium; therefore, it is crucial to reduce the leaching rate of platinum in the hydrochloric acid leaching process (S300) before the purification process. Additionally, reducing the leaching rate of platinum can decrease the amount of subsidiary materials required in repeated purification processes, thereby improving the economic efficiency of palladium production.

In an embodiment, the amount of hydrochloric acid is determined based on the palladium content in the neutralized precipitate (oxidized palladium slime), but is limited to a predetermined stoichiometric amount less than the palladium content. Preferably, the amount of hydrochloric acid used may be up to 11 equivalents (eq) relative to the palladium content in the neutralized precipitate formed in the neutralization process (S200). This is because if the amount of hydrochloric acid exceeds 11 equivalents relative to the palladium content in the neutralized precipitate, it can increase the leaching rate of the platinum to be removed. Also preferably, the amount of hydrochloric acid may be at least 9 equivalents relative to the palladium content because if it is less than 9 equivalents, it can reduce the leaching rate of palladium, the target for recovery. Therefore, limiting the amount of hydrochloric acid to 9 to 11 equivalents relative to the palladium content in the neutralized precipitate can maintain a high leaching rate for palladium while reducing the leaching rate of platinum, achieving optimal effects.

In an embodiment, the reaction temperature in the hydrochloric acid leaching process (S300) may be limited to a predetermined temperature. If the reaction temperature exceeds a specific limit, although the leaching rate of palladium can be maintained high, the leaching rate of platinum may also increase. Preferably, the reaction temperature in the hydrochloric acid leaching process (S300) may be up to 70°C. Furthermore, the reaction temperature may also be preferably at least a certain temperature (e.g., 50°C) because if the reaction temperature is below a certain level, it may decrease the leaching rate of platinum but also reduce the leaching rate of palladium, resulting in lower recovery rates.

Accordingly, the method for producing palladium from silver slime according to an embodiment of the invention effectively maintains a high leaching rate for palladium while reducing the leaching rate of platinum by limiting the stoichiometric amount of hydrochloric acid or the reaction temperature within appropriate ranges.

### Chloride Precipitation Process (S400)

In the chloride precipitation process (S400), palladium can be precipitated and recovered in the form of palladium chloride (PdCl₂) by adding a chloride precipitant to the hydrochloric acid leachate (containing leached palladium and platinum), which has been cleared of silver chloride precipitate. Ammonium chloride (NH₄Cl) and sodium hypochlorite (NaOCl) can be used as examples of precipitants that can be introduced together. In this case, the precipitation reaction in the chloride precipitation process (S400) can be represented by the following [Reaction Formula 5]. Preferably, the amount of ammonium chloride introduced in the chloride precipitation process (S400) may be 2.0 to 3.0 equivalents relative to the palladium content in the hydrochloric acid leachate, and the amount of sodium hypochlorite may be 0.5 to 1.5 equivalents relative to the palladium content. In Reaction Formula 5, both ammonium chloride and sodium hypochlorite participate directly in the reaction. Sodium hypochlorite plays a role in raising the ORP (oxidation-reduction potential) value of the solution, facilitating the reaction. The precipitate containing palladium is referred to as "chloride precipitate", and this precipitate may also contain impurities such as platinum.

[Reaction Formula 5] 2PdCl₂ + 4NH₄Cl + 4NaOCl + 2H₂O = 2(NH₄)₂PdCl₆ + 4NaOH + O₂(g)

Preferably, the neutralization reaction in the chloride precipitation process (S400) may be carried out for a reaction time of 2 to 4 hours at room temperature.

### Purification Process (S500)

The purification process (S500) involves repeatedly conducting leaching and precipitation processes on the chloride precipitate produced in the chloride precipitation process (S400) to remove impurities such as platinum and ultimately recover high-purity palladium. Specifically, the chloride precipitate is first introduced into ammonium hydroxide (NH₄OH) to selectively leach palladium in the ammonium reaction process (S510), followed by the introduction of a precipitant, such as hydrochloric acid (HCl), to precipitate palladium in the hydrochloric acid reaction process (S520). These processes may be repeated as needed. The reactions in the purification process (S500) can be represented by the following [Reaction Formula 6] for the ammonium reaction process (S510) and [Reaction Formula 7] for the hydrochloric acid reaction process (S520):

[Reaction Formula 6] (NH₄)₂PdCl₆ + 2NH₄OH = Pd(NH₃)₄Cl₂ + H₂(g) + 2Cl₂ + 2H₂O

[Reaction Formula 7] Pd(NH₃)₄Cl₂ + 2HCl = 2Pd(NH₃)₂Cl₂ + H₂(g)

Preferably, the ammonium reaction process (S510) in the purification process (S500) may be conducted at room temperature for 2 to 4 hours, at a pH of 10 to 11, with a solids density of 80 to 120 g/L.

The hydrochloric acid reaction process (S520) can be conducted at room temperature for 2 to 4 hours, at a pH of 1 to 2.

In an embodiment, the purification process (S500) may be performed repeatedly as needed to manufacture high-purity palladium. In this regard, the method for producing palladium from silver slime according to an embodiment of the present disclosure can significantly reduce the number of purification process iterations in the purification process (S500) by limiting the amount and reaction temperature of hydrochloric acid in the hydrochloric acid leaching process (S300), thereby remarkably reducing the leaching rate of platinum. For example, while conventional techniques might require three or more iterations of the purification process (S500), the application of the method according to an embodiment of the present disclosure can produce high-purity palladium with just one iteration of the purification process. This approach can minimize palladium loss while also reducing the usage of subsidiary materials such as leaching and precipitating agents.

Below, Examples are given to illustrate the method for producing palladium from silver slime according to the present disclosure.

In the following Examples and Comparative Examples, the method was conducted using silver (Ag) slime with the following composition.

**TABLE 1**

| | Pd | Ag | Au | Bi | Pt | Te | Cu | Pb |
|---|---|---|---|---|---|---|---|---|
| Content (%) | 0.34 | 66.6 | 30.0 | 0.49 | 0.04 | 0.13 | 0.77 | 0.18 |

### Gold Separation Process (S100)

In the gold separation process (S 100), a plurality of silver slime samples with the same composition were leached in nitric acid (HNO₃) under identical conditions. The reaction was carried out over 4 hours at a temperature of 70°C and a solid density of 250 g/L. The concentrations of metals in the resulting separation effluent are detailed in the following table.

**TABLE 2**

| | Pd | Ag | Au | Bi | Pt | Te | Cu | Pb |
|---|---|---|---|---|---|---|---|---|
| Concentration (g/L) | 2.63 | 144.0 | 0.001 | 2.99 | 0.19 | 0.62 | 3.18 | 0.81 |

### Neutralization Process (S200)

In the neutralization process (S200), the separation effluent was evaporated and concentrated, then diluted with distilled water before a neutralization reaction was carried out using sodium carbonate (Na₂CO₃) as the neutralizing agent. The reaction was maintained at a temperature of 70°C for 2 hours, with sodium carbonate added until the final pH reached 4. Following the neutralization reaction, silver (Ag) did not precipitate, allowing for the separation of most of the silver into the liquid. The composition of the neutralized precipitate containing oxidized palladium (oxidized palladium slime) is as follows:

**TABLE 3**

| | Pd | Ag | Au | Bi | Pt | Te | Cu | Pb |
|---|---|---|---|---|---|---|---|---|
| Content (%) | 12.9 | 13.7 | 0.003 | 11.4 | 1.30 | 2.56 | 5.68 | 0.48 |

### Hydrochloric Acid Leaching Process (S300)

In the hydrochloric acid leaching process (S300), hydrochloric acid was added to the neutralized precipitate to produce a leachate containing leached palladium and platinum. To compare the leaching rates of palladium and platinum depending on the amount of hydrochloric acid and reaction temperature, multiple tests were conducted with different settings of acid dosage and temperature. The reaction time was consistently 3 hours, solid density was 150 g/L, and the concentration of hydrochloric acid (HCl) was 35% for all tests. The measurements of palladium and platinum content in the hydrochloric acid leachate are as follows.
1. Leachate with hydrochloric acid dosage of 16 equivalents relative to palladium content in neutralized precipitate, and varying reaction temperatures:

**TABLE 4**

| | C. Ex. 1 (50°C) | C. Ex. 2 (60°C) | C. Ex. 3 (70°C) | C. Ex. 4 (80°C) |
|---|---|---|---|---|
| Pd Leaching Rate (%) | 99.3 | 99.5 | 99.8 | 99.9 |
| Pd Concentration (g/L) | 16.9 | 17.1 | 17.3 | 17.4 |
| Pt Leaching Rate (%) | 96.5 | 97.1 | 98.6 | 99.4 |
| Pt Concentration (g/L) | 1.66 | 1.68 | 1.72 | 1.74 |

2. Leachate with hydrochloric acid dosage of 13 equivalents relative to palladium content in neutralized precipitate, and varying reaction temperatures:

**Table 5**

| | C. Ex. 5 (50°C) | C. Ex. 6 (60°C) | C. Ex. 7 (70°C) | C. Ex. 8 (80°C) |
|---|---|---|---|---|
| Pd Leaching Rate (%) | 99.1 | 99.3 | 99.5 | 99.6 |
| Pd Concentration (g/L) | 16.7 | 16.9 | 17.1 | 17.2 |
| Pt Leaching Rate (%) | 88.5 | 89.6 | 96.8 | 98.0 |
| Pt Concentration (g/L) | 1.50 | 1.54 | 1.68 | 1.70 |

3. Leachate with hydrochloric acid dosage of 11 equivalents relative to palladium content in neutralized precipitate, and varying reaction temperatures

**TABLE 6**

| | Ex. 1 (50°C) | Ex. 2 (60°C) | Ex. 3 (70°C) | C. Ex. 9 (80°C) |
|---|---|---|---|---|
| Pd Leaching Rate (%) | 99.1 | 99.1 | 99.5 | 99.6 |
| Pd Concentration (g/L) | 16.7 | 16.9 | 17.1 | 17.2 |
| Pt Leaching Rate (%) | 21.2 | 22.0 | 22.8 | 90.3 |
| Pt Concentration (g/L) | 0.41 | 0.43 | 0.48 | 1.57 |

4. Leachate with hydrochloric acid dosage of 10 equivalents relative to palladium content in neutralized precipitate, and varying reaction temperatures

**TABLE 7**

| | Ex. 4 (50°C) | Ex. 5 (60°C) | Ex. 6 (70°C) | C. Ex. 10 (80°C) |
|---|---|---|---|---|
| Pd Leaching Rate (%) | 99.0 | 99.0 | 99.4 | 99.6 |
| Pd Concentration (g/L) | 16.8 | 16.8 | 17.0 | 17.2 |
| Pt Leaching Rate (%) | 11.8 | 12.0 | 12.8 | 88.3 |
| Pt Concentration (g/L) | 0.20 | 0.21 | 0.23 | 1.53 |

5. Leachate with hydrochloric acid dosage of 9 equivalents relative to palladium content in neutralized precipitate, and varying reaction temperatures

**TABLE 8**

| | Ex. 7 (50°C) | Ex. 8 (60°C) | Ex. 9 (70°C) | C. Ex. 11 (80°C) |
|---|---|---|---|---|
| Pd Leaching Rate (%) | 96.4 | 96.5 | 96.5 | 96.9 |
| Pd Concentration (g/L) | 15.8 | 15.8 | 15.8 | 16.1 |
| Pt Leaching Rate (%) | 11.4 | 11.5 | 12.7 | 33.9 |
| Pt Concentration (g/L) | 0.18 | 0.19 | 0.24 | 0.59 |

6. Leachate with hydrochloric acid dosage of 7 equivalents relative to palladium content in neutralized precipitate, and varying reaction temperatures

**TABLE 9**

| | C. Ex. 11 (50°C) | C. Ex. 12 (60°C) | C. Ex. 13 (70°C) | C. Ex. 14 (80°C) |
|---|---|---|---|---|
| Pd Leaching Rate (%) | 90.4 | 91.2 | 92.4 | 92.8 |
| Pd Concentration (g/L) | 15.0 | 15.2 | 15.6 | 15.8 |
| Pt Leaching Rate (%) | 11.3 | 11.6 | 12.4 | 30.4 |
| Pt Concentration (g/L) | 0.18 | 0.19 | 0.22 | 0.54 |

When examining the effects of hydrochloric acid dosage on the leaching of palladium and platinum from neutralized precipitates in Examples 1, 2, 3 and Comparative Examples 5, 6, 7, it was observed that exceeding 11 equivalents of hydrochloric acid relative to the palladium content in the neutralized precipitate did not significantly change the palladium leaching rate, which remained above 99%. However, the platinum leaching rate showed a significant difference, increasing to over 60%. On the other hand, in Examples 7, 8, 9, and Comparative Examples 11, 12, 13 where the hydrochloric acid dosage was less than 9 equivalents relative to the palladium content, the platinum leaching rate was high, but there is a significant decrease in palladium leaching rate, leading to increased palladium loss. Therefore, to optimally secure both high palladium and low platinum leaching rates, maintaining the hydrochloric acid dosage within a range of 9 to 11 equivalents relative to the palladium content is preferable. Within this range, a dosage of 10 equivalents relative to palladium content is found to be optimal for achieving the best leaching rates for both palladium and platinum.

Further analysis in Examples 3, 6, 9 and Comparative Examples 9, 10, 11 shows that when the reaction temperature in the hydrochloric acid leaching process (S300) exceeded 70°C, there was no significant change in the palladium leaching rate, but the platinum leaching rate sharply increased. Maintaining the reaction temperature at or below 70°C in the hydrochloric acid leaching process (S300) thus ensures that the palladium leaching rate remains high while significantly reducing the leaching rate of the impurity platinum. Notably, lowering the reaction temperature to as much as 50°C does not significantly affect the palladium leaching rate but greatly reduces the platinum leaching rate compared to palladium. Therefore, setting a reaction temperature of 50°C allows for maintaining an optimal palladium leaching rate while minimizing the leaching of platinum, thus achieving optimal process efficiency.

### Chloride Precipitation Process (S400)

In the chloride precipitation process (S400), the procedure was conducted only for Comparative Example 1 and Example 4, which showed stark contrasts in platinum leaching rates. Ammonium chloride (NH₄Cl) and sodium hypochlorite (NaOCl) were introduced to precipitate palladium and platinum. The reaction was maintained for 5 hours at a temperature of 25°C. Ammonium chloride was added at 2.5 equivalents relative to the palladium content from the previous step (hydrochloric acid leaching process), and sodium hypochlorite was added at 1.0 equivalent relative to the palladium content. The composition of the resulting chloride precipitate (Cl₂ precipitate cake) is shown below:

**TABLE 10**

| | C. Ex. 1 | Ex. 4 |
|---|---|---|
| Pd Leaching Rate (%) | 99.2 | 99.2 |
| Pd Content(%) | 29.5 | 30.1 |
| Pt Leaching Rate (%) | 28.8 | 24.7 |
| Pt Content(%) | 0.68 | 0.08 |

### Purification Process (S500)

In the purification process (S500), ammonium hydroxide (NH₄OH) was introduced to the chloride precipitates produced by the chloride precipitation process (S400) in Comparative Example 1 and Example 4 to selectively leach palladium. The reaction conditions were maintained for 3 hours at a temperature of 25°C, with a solid density of 150 g/L. Ammonium hydroxide was added at 9.0 equivalents relative to the palladium content. The palladium and platinum content in the leachate after the reaction are as follows.

**TABLE 11**

| | C. Ex. 1 | Ex. 4 |
|---|---|---|
| Pd Leaching Rate (%) | 99.9 | 99.9 |
| Pd Content(%) | 29.1 | 29.9 |
| Pt Leaching Rate (%) | 87.6 | 85.8 |
| Pt Content(%) | 0.59 | 0.07 |

Subsequently, hydrochloric acid was added to the leachate to selectively precipitate palladium. The reaction was maintained for 5 hours at a temperature of 25°C, with hydrochloric acid added at 17 equivalents relative to the palladium content. The quality of palladium and platinum in the precipitate after the reaction is as follows:

**TABLE 12**

| | C. Ex. 1 | Ex. 4 |
|---|---|---|
| Pd Leaching Rate (%) | 90.4 | 90.7 |
| Pd Content(%) | 55.1 | 56.2 |
| Pt Leaching Rate (%) | 20.1 | 18.5 |
| Pt Content(%) | 0.27 | 0.02 |

As demonstrated, the method for producing palladium from silver slime according to the present disclosure can effectively suppresses the leaching of platinum in the hydrochloric acid leaching process (S300) by setting the dosage of hydrochloric acid or reaction temperature to predetermined values. As a result, a single run of purification process can minimize the content of impurities (platinum).

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

## Claims

1. A method for producing palladium from silver slime, the method comprising:
a gold separation process of introducing silver slime into an acid solution to produce a separated effluent containing leached palladium;
a neutralization process of adding a neutralizing agent to the separated effluent to produce a neutralized precipitate containing oxidized palladium;
a hydrochloric acid leaching process of adding hydrochloric acid to the effluent containing the neutralized precipitate to produce a hydrochloric acid leachate containing leached palladium and platinum;
a chloride precipitation process of adding a precipitant to the hydrochloric acid leachate to produce a chloride precipitate containing palladium; and
a purification process for recovering the palladium from the chloride precipitate.

2. The method of claim 1, wherein the hydrochloric acid in in the hydrochloric acid leaching process is added in an amount of 9 to 11 equivalents relative to the palladium content in the neutralized precipitate.

3. The method of claim 2, wherein the hydrochloric acid added is added in an amount of 10 equivalents relative to the palladium content in the neutralized precipitate.

4. The method of any one of claims 1 to 3, wherein the hydrochloric acid has a concentration of 30% to 40%.

5. The method of claim 1, wherein the hydrochloric acid leaching process is carried out at a reaction temperature of 50°C to 70°C.

6. The method of claim 1, wherein the neutralization process further comprises a process of evaporating a portion of the separated effluent before the addition of the neutralizing agent.

7. The method of claim 1, wherein the purification process comprises repeating a process of leaching palladium from the chloride precipitate and precipitating the leached palladium.
